# EUROPEAN PATENT APPLICATION

(11) **EP 4 276 139 A1**
(43) Date of publication of application: **15.11.2023**
(21) Application number: 22864857.2
(22) Date of filing: 11.07.2022
(51) Int. Cl.: C08J 5/18, C08L 1/00, C08L 5/00, C08L 5/06, C08L 5/12, C08L 89/00, C08L 91/00, C08L 3/02, A24D 3/04, A24D 1/02

(54) **FRAGRANT SHEET HAVING ENHANCED AROMA RETENTION AND AROMA HOLDABILITY, AND SMOKING ARTICLE COMPRISING SAME**

(30) Priority: 06.09.2021 KR 20210118609
(71) Applicant: KT&G Corporation, Daedeok-gu Daejeon 34337 (KR)
(72) Inventor: LEE, Geon Chang, Daejeon 34128 (KR); KIM, Ick Joong, Daejeon 34128 (KR); JUNG, Kyung Bin, Daejeon 34128 (KR); JEOUNG, Eun Mi, Daejeon 34128 (KR); HWANG, Min Hee, Daejeon 34128 (KR)
(74) Representative: Ter Meer Steinmeister & Partner
(86) International application number: PCT/KR2022/010036
(87) International publication number: WO 2023/033348

(57) **Abstract**

A flavoring sheet with an enhanced flavor holding amount and flavor retention and a smoking article including the same are provided. The flavoring sheet according to some embodiments of the present disclosure may include a hydrocolloid material configured to form a sheet, an emulsifier, and a fat-soluble flavoring. The emulsifier may serve as a cross-link between the water-soluble hydrocolloid material and the fat-soluble flavoring and increase a flavor holding amount and flavor retention of the flavoring sheet.

## Description

### [Technical Field]

The present disclosure relates to a flavoring sheet with an enhanced flavor holding amount and flavor retention and a smoking article including the same, and more particularly, to a flavoring sheet with an enhanced holding amount and retention for a fat-soluble flavoring, a smoking article including the flavoring sheet, thus having enhanced flavor expression and flavor persistence, and a method of producing the flavoring sheet and the smoking article.

### [Background Art]

To satisfy smokers' preferences, smoking articles (e.g., cigarettes) are flavored in various ways. Directly adding (e.g., spraying) a flavoring liquid to a smoking material, such as shredded tobacco, or a filter plug is a typical example of a flavoring method. However, such methods have various problems that there is a limit to the amount of flavoring liquid added, the intended flavor is not expressed, or the flavor expression is rapidly decreased during smoking.

Specifically, in the method in which a flavoring liquid is added to a smoking material, since the flavoring liquid may aggregate with the smoking material, it is difficult to add a large amount of flavoring liquid. Also, an unintended flavor may be expressed due to deterioration of the flavoring liquid caused by a high heating temperature (or burning temperature) during smoking. Next, in the method in which a flavoring liquid is added to a filter plug, the flavoring liquid may be added in a larger amount as compared to the above method, but there is still a limitation in the amount of flavoring liquid added.

Meanwhile, regardless of the method, there is a problem that the added flavoring liquid is rapidly expressed at an early stage of smoking and the flavor expression decreases toward the end of smoking, and when the flavoring liquid is added in an excessive amount, a problem in which a wrapper wrapping around the filter plug or smoking material becomes wet and contaminated may occur.

### [Disclosure]

### [Technical Problem]

Some embodiments of the present disclosure are directed to providing a flavoring sheet with an enhanced flavor holding amount and flavor retention and a method of producing the flavoring sheet.

Some embodiments of the present disclosure are also directed to providing a smoking article with enhanced flavor expression and flavor persistence and a method of producing the smoking article.

Objectives of the present disclosure are not limited to the above-mentioned objectives, and other unmentioned objectives should be clearly understood by those of ordinary skill in the art to which the present disclosure pertains from the description below.

### [Technical Solution]

A flavoring sheet according to some embodiments of the present disclosure for achieving the above objectives may include a hydrocolloid material configured to form a sheet, an emulsifier, and a fat-soluble flavoring.

In some embodiments, the flavoring sheet may include, with respect to a total of 100 parts by weight, 0.5 to 10 parts by weight of the emulsifier.

In some embodiments, the flavoring sheet may include, with respect to a total of 100 parts by weight, 10 to 40 parts by weight of the fat-soluble flavoring.

In some embodiments, the hydrocolloid material may include a modified cellulose material.

In some embodiments, the flavoring sheet may further include low methoxyl pectin (LM-pectin).

A smoking article according to some embodiments of the present disclosure for achieving the above objectives may include a smoking material portion, a filter portion, and a wrapper configured to wrap around at least a portion of the smoking material portion or the filter portion, and a flavoring sheet may be applied to at least a portion of the smoking material portion, the filter portion, or the wrapper, and the flavoring sheet may include a hydrocolloid material, an emulsifier, and a fat-soluble flavoring.

### [Advantageous Effects]

According to some embodiments of the present disclosure, a flavoring sheet including a hydrocolloid material configured to form a sheet, an emulsifier, and a fat-soluble flavoring can be provided. Here, the emulsifier may serve as a cross-link between a water-soluble hydrocolloid material and a fat-soluble flavoring and increase a flavor holding amount and flavor retention of the flavoring sheet.

Also, by the flavoring sheet being applied in various forms to a smoking article, the flavor expression and flavor persistence of the smoking article can be improved. For example, by a flavoring, which is fixed by a sheet-forming agent, being slowly released during smoking, the flavor persistence of the smoking article can be significantly improved.

The advantageous effects according to the technical spirit of the present disclosure are not limited to those mentioned above, and other unmentioned advantageous effects should be clearly understood by those of ordinary skill in the art from the description below.

### [Description of Drawings]

FIG. 1 is an exemplary flowchart schematically illustrating a method of producing a flavoring sheet according to some embodiments of the present disclosure.
FIG. 2 is an exemplary view schematically illustrating a smoking article according to some embodiments of the present disclosure.
FIG. 3 is an exemplary view for describing a method of producing a wrapping material according to some embodiments of the present disclosure.
FIG. 4 is an exemplary view for describing a method of producing a wrapping material according to some other embodiments of the present disclosure.
FIG. 5 is an exemplary view schematically illustrating a smoking article according to some other embodiments of the present disclosure.
FIG. 6 is an exemplary view for describing a method of applying the flavoring sheet according to some embodiments of the present disclosure.
FIGS. 7 and 8 are exemplary views for describing processed forms of the flavoring sheet according to some embodiments of the present disclosure.

### [Modes of the Invention]

Hereinafter, exemplary embodiments of the present disclosure will be described in detail with reference to the accompanying drawings. Advantages and features of the present disclosure and methods of achieving the same should become clear from embodiments described in detail below with reference to the accompanying drawings. However, the technical spirit of the present disclosure is not limited to the following embodiments and may be implemented in various different forms. The following embodiments only make the technical spirit of the present disclosure complete and are provided to completely inform those of ordinary skill in the art to which the present disclosure pertains of the scope of the disclosure. The technical spirit of the present disclosure is defined only by the scope of the claims.

In assigning reference numerals to components of each drawing, it should be noted that the same reference numerals are assigned to the same components where possible even when the components are illustrated in different drawings. Also, in describing the present disclosure, when detailed description of a known related configuration or function is deemed as having the possibility of obscuring the gist of the present disclosure, the detailed description thereof will be omitted.

Unless otherwise defined, all terms including technical or scientific terms used in this specification have the same meaning as commonly understood by those of ordinary skill in the art to which the present disclosure pertains. Terms defined in commonly used dictionaries should not be construed in an idealized or overly formal sense unless expressly so defined herein. Terms used in this specification are for describing the embodiments and are not intended to limit the present disclosure. In this specification, a singular expression includes a plural expression unless the context clearly indicates otherwise.

Also, in describing components of the present disclosure, terms such as first, second, A, B, (a), and (b) may be used. Such terms are only used for distinguishing one component from another component, and the essence, order, sequence, or the like of the corresponding component is not limited by the terms. In a case in which a certain component is described as being "connected," "coupled," or "linked" to another component, it should be understood that, although the component may be directly connected or linked to the other component, still another component may also be "connected," "coupled," or "linked" between the two components.

The terms "comprises" and/or "comprising" used herein do not preclude the possibility of presence or addition of one or more components, steps, operations, and/or devices other than those mentioned.

First, some terms used in various embodiments of the present disclosure will be clarified.

In the following embodiments, "smoking article" may refer to any product that can be smoked or any product that can provide a smoking experience, regardless of whether the product is based on tobacco, tobacco derivatives, expanded tobacco, reconstituted tobacco, or tobacco substitutes. For example, smoking articles may include products that can be smoked, such as a cigarette, a cigar, and a cigarillo. As another example, smoking articles may include a burning-type smoking article and a heating-type smoking article.

In the following embodiments, "smoking material" may refer to any material that generates smoke and/or aerosol or is used in smoking. For example, the smoking material may include a tobacco material. For example, the tobacco material may include pieces of tobacco leaves, tobacco stems, or materials obtained by processing the pieces of tobacco leaves or tobacco stems. As a more specific example, the tobacco material may include ground tobacco leaves, ground reconstituted tobacco, expanded shredded tobacco, expanded tobacco midribs, and reconstituted tobacco leaves. However, the tobacco material is not limited thereto.

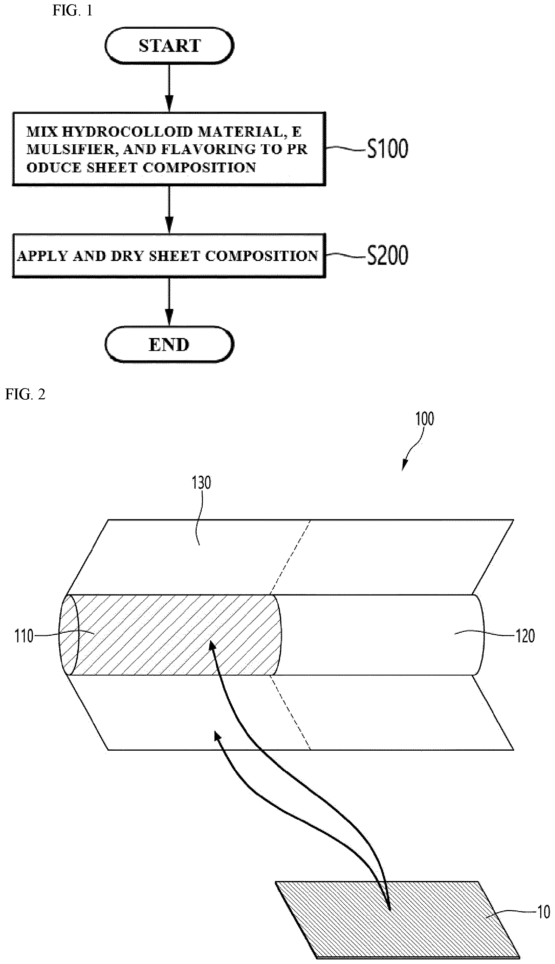

In the following embodiments, "upstream" or "upstream direction" may refer to a direction moving away from an oral region of a smoker, and "downstream" or "downstream direction" may refer to a direction approaching the oral region of the smoker. The terms "upstream" and "downstream" may be used to describe relative positions of components constituting a smoking article. For example, in a smoking article 100 illustrated in FIG. 2, a filter portion 120 is disposed downstream or in a downstream direction of a smoking material portion 110, and the smoking material portion 110 is disposed upstream or in an upstream direction of the filter portion 120.

In the following embodiments, "longitudinal direction" may refer to a direction corresponding to a longitudinal axis of a smoking article.

In the following embodiments, "puff" refers to inhalation by a user (smoker), and the inhalation may be a situation in which a user draws smoke into his or her oral cavity, nasal cavity, or lungs through the mouth or nose.

In the following embodiments, "sheet" may refer to a thin layer component whose width and length are substantially larger than a thickness thereof. The term "sheet" may be interchangeably used with the term "web" or "film" in the art.

In the following embodiments, "flavor sheet" or "flavoring sheet" may refer to a flavoring-containing material that is produced in the form of a sheet.

Hereinafter, various embodiments of the present disclosure will be described in detail with reference to the accompanying drawings.

According to some embodiments of the present disclosure, a flavoring sheet with an enhanced flavor holding amount and flavor retention can be provided. Specifically, when producing a flavoring sheet based on a water-soluble (hydrophilic) sheet-forming agent, an emulsifier may be added to significantly enhance a flavor holding amount and flavor retention for a fat-soluble (lipophilic) flavoring. By simultaneously having water-soluble and fat-soluble structures, the emulsifier may serve as a cross-link between a water-soluble sheet-forming agent and a fat-soluble flavoring and may allow a large amount of fat-soluble flavoring to be fixed well to the sheet-forming agent. Therefore, using the emulsifier, a flavoring sheet with a significantly enhanced flavor holding amount and flavor retention can be produced, and using the flavoring sheet, a smoking article with enhanced flavor expression and flavor persistence can also be easily produced.

First, the flavoring sheet described above and a method of producing the flavoring sheet will be described with reference to FIG. 1.

FIG. 1 is an exemplary flowchart schematically illustrating a method of producing a flavoring sheet according to some embodiments of the present disclosure. However, this is only an exemplary embodiment for achieving the objectives of the present disclosure, and, of course, some steps may be added or omitted as necessary.

As illustrated in FIG. 1, the producing method may start with producing a sheet composition (S100). Specifically, a hydrocolloid material, an emulsifier, and a flavoring may be mixed with a solvent such as distilled water or ethanol to produce a sheet composition in a liquid phase (e.g., a slurry form). Here, the liquid phase may not only include a liquid form but also include a form in which a liquid and a solid are mixed (e.g., a slurry form). The flavoring is a fat-soluble flavoring, but the scope of the present disclosure is not limited thereto.

The solvent such as distilled water may be a component for controlling the viscosity of the slurry-type sheet composition.

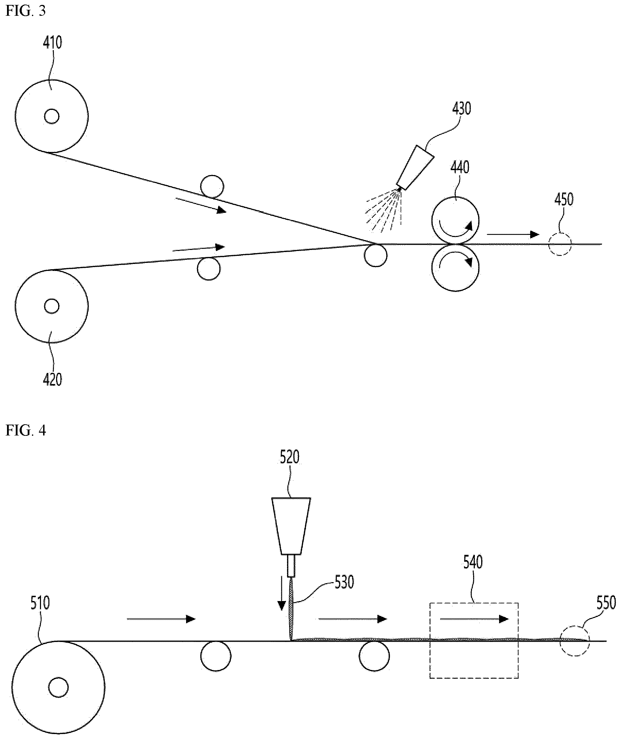

Next, the hydrocolloid material may be a material for covering and fixing the flavoring and may be a sheet-forming agent for forming a sheet. Since the hydrocolloid material itself becomes sticky when in contact with the solvent such as distilled water or ethanol, a flavoring sheet based on such a material has an advantage that it can be easily attached to a smoking article without a separate adhesive (see FIG. 3 and the like). In other words, when the hydrocolloid material is used as a sheet-forming agent, a process of attaching (placing) the flavoring sheet can be simplified, and the flavoring sheet may be free from a safety problem due to an adhesive.

Examples of the hydrocolloid material may include gelatin, agar, gellan gum, pectin, guar gum, xanthan gum, glucomannan, hydroxypropyl methylcellulose (HPMC), methyl cellulose (MC), ethyl cellulose (EC), carboxymethyl cellulose (CMC), and starch, but the hydrocolloid material is not limited thereto.

Next, the emulsifier may allow a highly fat-soluble flavoring and a water-soluble hydrocolloid material to be mixed well and significantly increase the flavor holding amount and flavor retention of the flavoring sheet. Examples of the emulsifier may include natural emulsifiers such as montanov wax, olive wax, lecithin, glyceryl stearate, and stearic acid and synthetic emulsifiers such as monoglyceride, diglyceride, sorbitan, and fatty acid ester, but the emulsifier is not limited thereto.

Next, examples of the flavoring may include menthol, nicotine, nicotine salt, a leaf tobacco extract, a leaf tobacco extract containing nicotine, a natural vegan flavoring (e.g., cinnamon, sage, herb, chamomile, kudzu, amacha, clove, lavender, cardamom, clove, nutmeg, bergamot, geranium, honey essence, rose oil, lemon, orange, cinnamon, caraway, jasmine, ginger, coriander, vanilla extract, spearmint, peppermint, cassia, coffee, celery, cascarilla, sandalwood, cocoa, ylang-ylang, fennel, anise, licorice, St. John's bread, plum extract, peach extract, etc.), sugars (e.g., glucose, fructose, isomerized sugar, caramel, etc.), cocoa (e.g., powder, extract, etc.), esters (e.g., isoamyl acetate, linalyl acetate, isoamyl propionate, linalyl butyrate, etc.), ketones (e.g., menthone, ionone, damascenone, ethyl maltol, etc.), alcohols (e.g., geraniol, linalool, anetol, eugenol, etc.), aldehydes (e.g., vanillin, benzaldehyde, anisaldehyde, etc.), lactones, (e.g., γ-undecalactone, γ-nonalactone, etc.), an animal flavoring (e.g., musk, ambergris, civet, castoreum, etc.), and hydrocarbons (e.g., limonene, pinene, etc.). The flavoring may be used in a solid state or may be used by being dissolved or dispersed in an appropriate solvent, e.g., propylene glycol, ethyl alcohol, benzyl alcohol, or triethyl citrate. These flavorings may be used alone or used in a mixture. However, the scope of the present disclosure is not limited by the examples described above.

Meanwhile, in some embodiments, the sheet composition may include a modified cellulose material among various hydrocolloid materials. Here, "modified cellulose" may refer to cellulose in which a specific functional group is substituted in a molecular structure. Examples of modified cellulose may include HPMC, MC, CMC, and EC, but modified cellulose is not limited thereto. For example, HPMC may have a grade in a range of about 4 to 40000 according to a proportion and molecular weight in which a hydroxypropyl group and a methyl group (or methoxy group) are substituted. The viscosity of modified cellulose may be determined according to the grade. More specifically, physicochemical characteristics of HPMC relate to a proportion of the methoxy group and a proportion and molecular weight of the hydroxypropyl group, and according to The United States Pharmacopeial Convention (USP), types of HPMC may be classified into HPMC1828, HPMC2208, HPMC2906, HPMC2910, and the like according to proportions of the methoxy group and hydroxypropyl group. Here, the first two numbers may refer to a proportion of the methoxy group, and the last two numbers may refer to a proportion of the hydroxypropyl group. As a result of continuous experiments by the inventors of the present disclosure, the flavoring sheet produced from the sheet composition including modified cellulose was confirmed as having excellent physical properties and holding a large amount of flavor.

Also, in some embodiments, the sheet composition may further include low methoxyl pectin (LM-pectin). LM-pectin is a low ester-pectin or low methoxyl pectin in which relatively little esterification is performed. Specifically, LM pectin may be pectin that contains a carboxyl group by less than about 50% in a molecular structure. Due to having a characteristic of not gelating when cooled unlike carrageenan, LM-pectin may lower the viscosity of the slurry-type sheet composition (e.g., to about 600 cp to 800 cp) and thus improve workability of a process of producing the flavoring sheet.

LM-pectin may contain a carboxyl group by less than about 50%, less than about 40%, less than about 30%, less than about 20%, or less than about 10% in a molecular structure. The lower the content of the carboxyl group in the molecular structure of LM-pectin, the lower the viscosity of a slurry including LM-pectin.

Also, in some embodiments, the sheet composition may further include a bulking agent. The bulking agent may be a material that increases the total mass of components other than distilled water (that is, dry mass) to increase the volume of the flavoring sheet being produced but does not affect the original function of the flavoring sheet. Specifically, the bulking agent may have characteristics of increasing the volume of the flavoring sheet but not adversely affecting the flavor retaining function of the flavoring sheet while not substantially increasing the viscosity of the slurry. The bulking agent may be starch, modified starch, or starch hydrolyzate but is not limited thereto.

Modified starch refers to starch acetate, oxidized starch, hydroxypropyl distarch phosphate, hydroxypropyl starch, distarch phosphate, monostarch phosphate, phosphorylated distarch phosphate, or the like.

Starch hydrolyzate refers to a material obtained by a process that includes a process of hydrolyzing starch. For example, starch hydrolyzate may include a material obtained by directly hydrolyzing starch (that is, dextrin) or a material obtained by heating and hydrolyzing starch (that is, indigestible dextrin). For example, the bulking agent may be dextrin, more specifically, cyclodextrin.

Generally, starch hydrolyzate may be starch hydrolyzate having a dextrose equivalent (DE) value in a range of about 2 to about 40 or may be starch hydrolyzate having a DE value in a range of about 2 to about 20. For example, as the starch hydrolyzate having a DE value in a range of about 2 to about 20, Pinedex #100 (Matsutani Chemical Industry Co. Ltd), Pinefiber (Matsutani Chemical Industry Co. Ltd), TK-16 (Matsutani Chemical Industry Co. Ltd), or the like may be utilized.

Here, "DE" is an abbreviation of "dextrose equivalent," and the DE value indicates a degree of hydrolysis of starch, that is, a saccharification rate of starch. In the present disclosure, the DE value may be a value measured by the Willstatter-Schudel method. Characteristics of hydrolyzed starch (starch hydrolyzate), for example, characteristics such as a molecular weight of starch hydrolyzate and arrangement of sugar molecules constituting starch hydrolyzate, may not be constant for each molecule of starch hydrolyzate and may be present with a certain distribution or variation. Due to the distribution or variation of the characteristics of starch hydrolyzate or a difference in cut sections, each molecule of starch hydrolyzate may exhibit different physical properties (e.g., DE value). In this way, starch hydrolyzate is a set of molecules exhibiting different physical properties, but a measurement result (that is, DE value) by the Willstatter-Schudel method is considered a representative value indicating the degree of hydrolysis of starch.

Starch hydrolyzate may be selected from the group consisting of dextrin having a DE value in a range of about 2 to about 5, indigestible dextrin having a DE value in a range of about 10 to about 15, and a mixture thereof. For example, as the dextrin having a DE value in a range of about 2 to about 5, Pinedex #100 (Matsutani Chemical Industry Co. Ltd) may be utilized. For example, as the indigestible dextrin having a DE value in a range of about 10 to about 15, Pinefiber (Matsutani Chemical Industry Co. Ltd) may be utilized.

Also, in some embodiments, the sheet composition may further include a plasticizer. The plasticizer may add appropriate flexibility to the flavoring sheet and thus improve physical properties of the sheet. For example, the plasticizer may include at least one of glycerin and propylene glycol but is not limited thereto.

In step S200, the produced sheet composition may be applied and dried to produce a flavoring sheet. For example, the flavoring sheet may be produced by applying (e.g., casting) the sheet composition on a predetermined substrate and drying the sheet composition.

The flavoring sheet produced as above may have various composition ratios (content ratios), and specific composition ratios may vary according to mixing ratios, drying conditions, and the like of the sheet composition.

In some embodiments, the flavoring sheet may include, with respect to a total of 100 parts by weight, about 0.5 to 10 parts by weight of the emulsifier. It was confirmed that, within such numerical ranges, an amount of flavoring held and retention thereof are enhanced. For example, it was confirmed that, when the content of the emulsifier is too low, an increase in the amount of flavoring held is insignificant, and when the content of the emulsifier is too high, the content of sheet-forming agent covering the flavoring or the content of flavoring is reduced such that the amount of flavoring held is not significantly increased.

Also, in some embodiments, the flavoring sheet may, with respect to a total of 100 parts by weight, include about 10 to 60 parts by weight or 10 to 40 parts by weight of a flavoring or include about 20 parts by weight or more, 22 parts by weight or more, 24 parts by weight or more, or 26 parts by weight or more of a flavoring. It was confirmed that, when an appropriate amount of emulsifier is added, the amount of fat-soluble flavoring held is increased by about 10% or higher, 15% or higher, or 20% or higher as compared to when the emulsifier is not added.

Also, in some embodiments, the flavoring sheet may include, with respect to a total of 100 parts by weight, about 2 to about 15 parts by weight of moisture, about 25 to about 90 parts by weight of modified cellulose, and about 0.1 to about 60 parts by weight of a flavoring. Also, the flavoring sheet may further include about 0.5 to 10 parts by weight of an emulsifier.

Also, in some embodiments, the flavoring sheet may include, with respect to a total of 100 parts by weight, about 2 to about 15 parts by weight of moisture, about 1 to about 60 parts by weight of hydrocolloid material, about 1 to about 60 parts by weight of LM-pectin, and about 0.1 to about 60 parts by weight of a flavoring. Also, the flavoring sheet may further include about 0.5 to 10 parts by weight of an emulsifier.

Also, in some embodiments, with respect to a total of 100 parts by weight of the flavoring sheet, a plasticizer may be included by as much as about 0.1 to about 15 parts by weight. Within such numerical ranges, a sheet having appropriate flexibility can be formed. For example, in a case in which the amount of added plasticizer is too small, flexibility of the sheet may be decreased and thus the flavoring sheet may be easily damaged during processing, and in a case in which the amount of added plasticizer is too large, the sheet may not be formed well.

The flavoring sheet and the method of producing the flavoring sheet according to some embodiments of the present disclosure have been described above with reference to FIG. 1. According to the above description, by adding the emulsifier that serves as a cross-link between a water-soluble hydrocolloid material and a fat-soluble flavoring, a flavoring sheet with an enhanced flavor holding amount and flavor retention can be easily produced.

Hereinafter, a smoking article (e.g., 100) including the flavoring sheet described above, thus having enhanced flavor expression and flavor persistence, will be described in detail with reference to FIG. 2 and so on.

FIG. 2 is an exemplary view schematically illustrating a smoking article 100 according to some embodiments of the present disclosure.

As illustrated in FIG. 2, the smoking article 100 may include the filter portion 120, the smoking material portion 110, and a wrapper 130. However, only the components relating to the embodiment of the present disclosure are illustrated in FIG. 2. Therefore, those of ordinary skill in the art to which the present disclosure pertains should understand that the smoking article 100 may further include general-purpose components other than the components illustrated in FIG. 2. Also, FIG. 2 only illustrates one example of smoking articles according to various embodiments of the present disclosure, and a detailed structure of the smoking article may be changed from that illustrated in FIG. 2. Hereinafter, each component of the smoking article 100 will be described.

The filter portion 120 may perform a function of filtering smoke and/or an aerosol generated from the smoking material portion 110. To this end, the filter portion 120 may include a filter material. Examples of the filter material may include a cellulose acetate fiber, paper, etc., but the scope of the present disclosure is not limited thereto. The filter portion 120 may further include the wrapper 130 configured to wrap around the filter material (plug).

As illustrated, the filter portion 120 may be disposed downstream of the smoking material portion 110 and may be connected to a downstream end of the smoking material portion 110. For example, the filter portion 120 and the smoking material portion 110 may have a cylindrical shape (rod shape), may be aligned in the longitudinal axis direction, and may be connected by a tipping wrapper. The tipping wrapper may wrap around at least a portion of the filter portion 120 and at least a portion of the smoking material portion 110 together to connect the filter portion 120 and the smoking material portion 110. In a case in which the filter portion 120 forms a downstream end of the smoking article 100, the filter portion 120 may also serve as a mouthpiece that comes into contact with the oral region of the smoker.

Since the filter portion 120 is produced in the form of a rod, the filter portion 120 may be referred to as a "filter rod 120" in some cases and may be produced in various shapes such as a cylindrical shape, a tubular shape including a hollow therein, and a recessed shape.

Next, the smoking material portion 110 may include a smoking material that can generate smoke and/or an aerosol when burned or heated. The smoking material portion 110 may further include the wrapper 130 configured to wrap around the smoking material.

As illustrated, the smoking material portion 110 may be disposed upstream of the filter portion 120 and may be connected to an upstream end of the filter portion 120. The smoke and/or aerosol generated from the smoking material portion 110 may be delivered to the oral region of the smoker via the filter portion 120 by a puff.

Since the smoking material portion 110 is also produced in the form of a rod, the smoking material portion 110 may be referred to as a "smoking material rod 110" in some cases. Alternatively, the smoking material portion 110 may be referred to as a "medium portion 110."

For example, the smoking material may include a tobacco material. For example, the tobacco material may include pieces of tobacco leaves, tobacco stems, or materials obtained by processing the pieces of tobacco leaves or tobacco stems. As a more specific example, the tobacco material may include ground tobacco leaves, ground reconstituted tobacco, expanded shredded tobacco, expanded tobacco midribs, and reconstituted tobacco leaves. However, the tobacco material is not limited thereto. Also, the tobacco material may have the form of shredded tobacco, tobacco particles, tobacco sheets, tobacco beads, tobacco granules, or tobacco extracts but is not limited thereto.

In some embodiments, the smoking material may further include an additive such as a wetting agent (moisturizer), a flavoring agent, and/or an organic acid. For example, the wetting agent may include at least one of glycerin, propylene glycol, ethylene glycol, dipropylene glycol, diethylene glycol, triethylene glycol, tetraethylene glycol, and oleyl alcohol. The wetting agent may maintain moisture in the tobacco material at an optimum level and thus soften the inherent flavor and produce a large amount of vapor. Also, for example, the flavoring agent may include licorice, saccharose, fructose syrup, isosweet, cocoa, lavender, cinnamon, cardamom, celery, fenugreek, cascarilla, white sandalwood, bergamot, geranium, honey essence, rose oil, vanilla, lemon oil, orange oil, mint oil, cinnamon, caraway, cognac, jasmine, chamomile, menthol, cinnamon, ylang-ylang, sage, spearmint, ginger, cilantro, a clove extract (or a clove material), coffee, or the like.

Next, the wrapper 130 may refer to a wrapper that wraps around at least a portion of the smoking material portion 110 and/or the filter portion 120. The wrapper 130 may refer to a separate wrapper of the smoking material portion 110 or the filter portion 120 or may refer to a wrapper, such as a tipping wrapper, that wraps around at least a portion of the smoking material portion 110 and at least a portion of the filter portion 120 together. The wrapper 130 may also collectively refer to all wrappers used in the smoking article 100. The wrapper 130 may be made of porous or nonporous wrapping paper, but the scope of the present disclosure is not limited thereto. For example, the wrapper 130 may be made of a metal foil or have a form in which wrapping paper and a metal foil are laminated with each other.

According to various embodiments of the present disclosure, as illustrated, a flavoring sheet 10 may be applied to (disposed on) the smoking material portion 110 and/or the wrapper 130. The flavoring sheet 10 applied in this way may continuously express a flavor during smoking and thus improve flavor expression and flavor persistence of the smoking article 100. In other words, different from a case in which a flavoring is added in a liquid form, a flavoring fixed (covered) by a sheet-forming agent is slowly and continuously expressed during smoking, and thus a problem that most of the flavor is expressed at an early stage of smoking can be effectively addressed. However, specific methods of applying the flavoring sheet 10 may vary.

In some embodiments, the flavoring sheet 10 may be disposed (e.g., attached (laminated), coated) on an inner side of the wrapper 130. For example, the flavoring sheet 10 may be disposed on the inner side of the wrapper 130 while having a form that surrounds all or part of the smoking material portion 110. In a case in which at least a portion of the wrapper 130 is made of a metal foil, the flavoring sheet 10 may be disposed on an inner side of the metal foil. In this case, the flavor expression of the flavoring sheet 10 can be further promoted by heat transferred through the metal foil. A process of placing the flavoring sheet 10 on the wrapper 130 will be described below with reference to FIGS. 3 and 4.

In some other embodiments, the flavoring sheet 10 may constitute at least a portion of the wrapper 130. That is, the flavoring sheet 10 itself may serve as the wrapper 130 of the smoking article 100. Here, the wrapper 130 may only consist of the flavoring sheet 10 or may have a form in which the flavoring sheet 10 and wrapping paper are integrated. In this case, since there is no need to perform a process of placing the flavoring sheet 10 on the wrapper 130 (e.g., an attaching (laminating) process, a coating process), the process of producing the smoking article 100 can be further simplified.

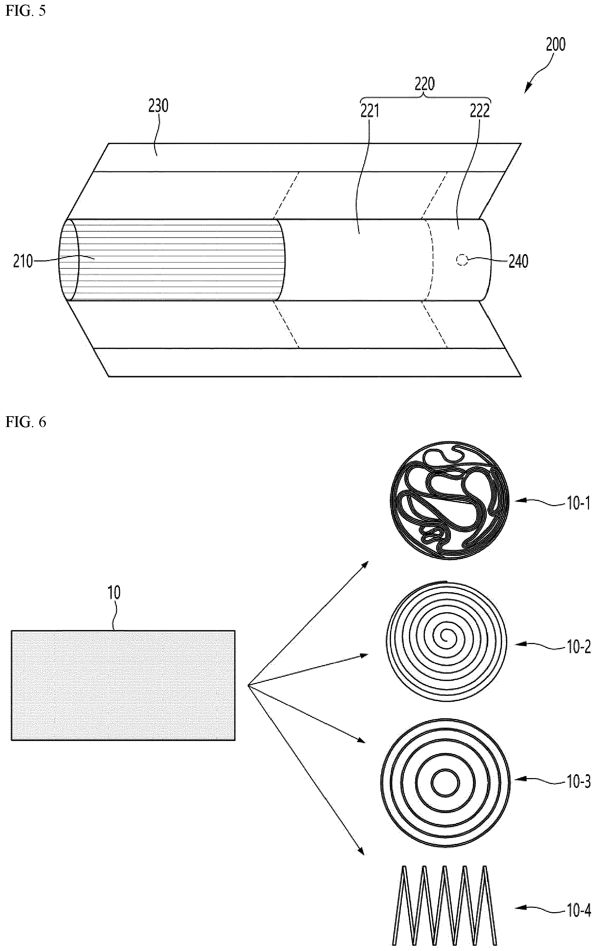

In still some other embodiments, the flavoring sheet 10 may be applied to a portion other than the wrapper 130. For example, the flavoring sheet 10 in a cut form may be mixed with shredded tobacco (e.g., shredded tobacco leaves, shredded reconstituted tobacco leaves, etc.) and added to the smoking material portion 110. As another example, the flavoring sheet 10 may be added to the smoking material portion 110 while stacked (attached) on a tobacco sheet (e.g., a tobacco material in the form of sheets such as reconstituted tobacco leaves). As still another example, the flavoring sheet 10 in a rolled or folded form may be disposed on the smoking material portion 110 or other portions (e.g., an inside of a cooling portion, an inner wall of the cooling portion, etc.), and this example will be described in more detail below with reference to FIGS. 5 to 8.

The smoking article 100 according to some embodiments of the present disclosure have been described above with reference to FIG. 2. According to the above description, by the flavoring sheet 10 being applied in various forms to the smoking article 100, the flavor expression and flavor persistence of the smoking article 100 can be improved. For example, by a flavoring, which is fixed by a sheet-forming agent, being slowly released during smoking, the flavor persistence of the smoking article 100 can be significantly improved.

Hereinafter, a method of producing a wrapping material to which the flavoring sheet 10 is applied will be described with reference to FIGS. 3 and 4.

A wrapping material according to embodiments may be produced using the flavoring sheet 10 or a sheet composition which is a raw material of the flavoring sheet 10. However, specific methods of producing the wrapping material may vary according to embodiments.

In some embodiments, a wrapping material may be produced through a process of laminating the flavoring sheet 10 and wrapping paper. In order to provide more convenience of understanding, the present embodiment will be additionally described with reference to FIG. 3.

As illustrated in FIG. 3, wrapping paper may be supplied through a first bobbin 410 around which the wrapping paper is wound, and simultaneously, the flavoring sheet 10 may be supplied through a second bobbin 420 around which the flavoring sheet 10 is wound. Also, the supplied wrapping paper and flavoring sheet 10 may be laminated through a press roller 440. Here, in a case in which the flavoring sheet 10 is made of a hydrocolloid material, a predetermined liquid may be sprayed through a sprayer 430. Also, the flavoring sheet 10 becomes sticky due to the sprayed liquid, and thus the flavoring sheet 10 can be strongly laminated with the wrapping paper without a separate adhesive. Also, accordingly, a wrapping material 450 of a smoking article can be easily produced. The produced wrapping material 450 may be cut into pieces of appropriate size and used as a wrapper of a smoking article.

Examples of the predetermined liquid may include water (distilled water), ethanol, or the like, but the predetermined liquid is not limited thereto.

Also, a thickness of the flavoring sheet 10 supplied through the second bobbin 420 may be in a range of about 60 µm to 150 µm or may be in a range of about 60 µm to 120 µm. Within such numerical ranges, the flavoring sheet 10 can be easily laminated with the wrapping paper, the wrapping material 450 can be prevented from becoming too thick, and appropriate flexibility can be secured.

In some other embodiments, a wrapping material may be produced through a coating process of applying a liquid sheet composition on wrapping paper and drying the sheet composition. In order to provide more convenience of understanding, the present embodiment will be additionally described with reference to FIG. 4.

As illustrated in FIG. 4, wrapping paper may be supplied through a bobbin 510 around which the wrapping paper is wound. Also, a liquid (e.g., slurry-form) sheet composition 530 may be applied on the supplied wrapping paper through an applicator 520 (e.g., a nozzle). The sheet composition 530 may be naturally dried during a wrapping paper transfer process 540 or may be dried in a separate drying facility. As a result, the sheet composition 530 may be appropriately coated on the wrapping paper, and a wrapping material 550 may be produced. The produced wrapping material 550 may be cut into pieces of appropriate size and used as a wrapper of a smoking article.

Here, a thickness that the coated sheet composition 530 occupies may be less than or equal to about 100 µm or may be less than or equal to about 90 µm, 80 µm, 70 µm, 60 µm, or 50 µm. Within such numerical ranges, the wrapping material 550 can be prevented from becoming too thick, and appropriate flexibility can be secured.

When the wrapping materials 450 and 550 are produced as described above, the produced wrapping materials 450 and 550 may be cut into pieces of appropriate size, and at least a portion of a smoking article (e.g., 100) may be wrapped with the cut wrapping materials 450 and 550 to produce the smoking article (e.g., 100) with enhanced flavor persistence and flavor expression. For example, the smoking article (e.g., 100) may be produced by wrapping at least a portion of a smoking material portion (e.g., 110) with the wrapping materials 450 and 550.

The methods of producing a wrapping material according to some embodiments of the present disclosure have been described above with reference to FIGS. 3 and 4. According to the above description, by the flavoring sheet 10 being laminated with the wrapping paper of the smoking article (e.g., 100) or the composition of the flavoring sheet 10 being applied on the wrapping paper, a wrapping material of the smoking article (e.g., 100) can be easily produced. Further, when the produced wrapping material is used, there is an advantage that an existing production facility (that is, a facility which performs wrapping of a smoking article) can be used as it is to produce the smoking article (e.g., 100).

Hereinafter, a smoking article 200 and a method of applying the flavoring sheet 10 thereto according to some other embodiments of the present disclosure will be described with reference to FIG. 5 and so on. However, for clarity of the present disclosure, description of contents overlapping with the smoking article 100 described above will be omitted.

FIG. 5 is an exemplary view illustrating the smoking article 200 according to some other embodiments of the present disclosure.

As illustrated in FIG. 5, the smoking article 200 may include a smoking material portion 210 and a filter portion 220, and the filter portion 220 may include a plurality of segments 221 and 222.

The smoking material portion 210 may correspond to the smoking material portion 110 described above. Therefore, description thereof will be omitted.

Next, the filter portion 220 may be made of a first segment 221 and a second segment 222. Of course, the filter portion 220 may further include a third segment (not illustrated).

The first segment 221 may perform a function of cooling smoke and/or an aerosol generated from the smoking material portion 210. Therefore, the first segment 221 may be referred to as a "cooling segment 221" or a "cooling portion 221" in some cases.

The first segment 221 may be produced in various forms. As an example, the first segment 221 may be a cylindrical paper tube that is made of a paper material and includes a hollow formed therein. As another example, the first segment 221 may be produced using a polymer material or a biodegradable polymer material. For example, the first segment 221 may be produced using a polylactic acid (PLA) fiber but is not limited thereto. As still another example, the first segment 221 may be produced as a cellulose acetate filter having a plurality of holes formed therein. As yet another example, the first segment 221 may be a tubular filter including a hollow formed therein. For example, the first segment 221 may be a cellulose acetate filter including a hollow formed therein. However, the first segment 221 is not limited thereto and may be produced in any other form as long as the first segment 221 can perform a cooling function.

In some embodiments, the flavoring sheet 10 may be applied to the first segment 221. Specifically, the flavoring sheet 10 may be disposed on an inside (e.g., a hollow, a cavity, or the like) or an inner wall of the first segment 221. However, specific processed forms of the flavoring sheet 10 and/or methods of applying the same may vary.

In some examples, as illustrated in FIG. 6, the flavoring sheet 10 may be applied to the first segment 221 in a form in which the flavoring sheet 10 is rolled or folded in irregular patterns (see "10-1"). Alternatively, the flavoring sheet 10 may be applied to the first segment 221 in a form in which the flavoring sheet 10 is rolled in a vortex form (see "10-2") or a form in which the flavoring sheet 10 is rolled in a concentric form (see "10-3"). Alternatively, the flavoring sheet 10 may be applied to the first segment 221 in a form in which the flavoring sheet 10 is folded several times (e.g., a form in which the flavoring sheet 10 is folded to secure an airflow path in the longitudinal direction) (see "10-4"). When the flavoring sheet 10 is applied to the first segment 221 in the above-listed forms, an airflow path may be secured in the longitudinal direction, and thus a smooth airflow and appropriate resistance to draw can be ensured. Also, an area of contact between the flavoring sheet 10 and a high-temperature airflow is increased, and thus cooling performance of the first segment 221 can be improved.

Also, in some examples, the flavoring sheet 10 may be attached to an inner wall of the first segment 221. In this case, since the flavoring sheet 10 does not have any negative influence on an airflow in the first segment 221, a smooth airflow and appropriate resistance to draw can be better ensured.

Meanwhile, in the above examples, the flavoring sheet 10 may be a sheet processed through a predetermined process.

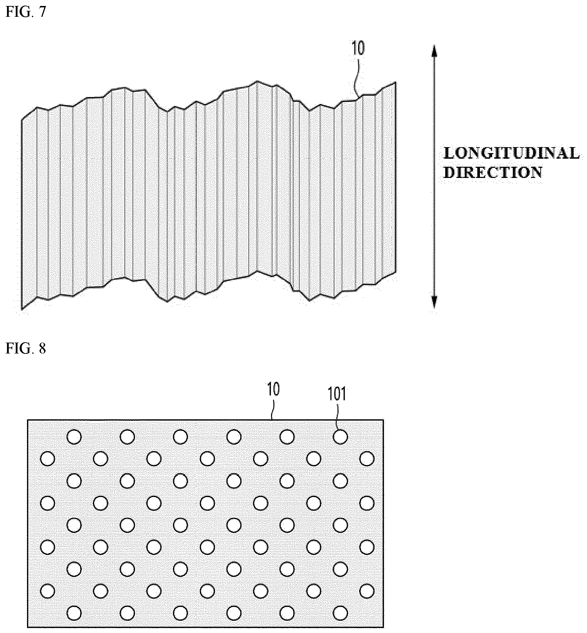

For example, as illustrated in FIG. 7, the flavoring sheet 10 may be processed to be pleated or folded in the longitudinal direction (that is, the machine direction (MD)) of the smoking article 200. For example, the flavoring sheet 10 may be pleated or folded according to at least one of a crimping process, a pleating process, a folding process, and a gathering process. Specifically, the crimping process is a process in which creep is assigned to a sheet surface through a difference between pressure and speed of a roller of a crimping device, and the crimping process may be divided into a wet process and a dry process. The wet process refers to a process in which base paper is soaked in water and then softened and crimped and undergoes a re-drying process. The dry process refers to a drying process using two dryers with different temperatures. Since the pleating process, folding process, and gathering process should already be familiar to those of ordinary skill in the art, further descriptions thereof will be omitted. According to the present embodiment, a plurality of channels may be formed in the flavoring sheet 10 in a longitudinal direction thereof by at least one of the processes described above, and a smooth airflow and appropriate resistance to draw can be ensured by the formed channels. Further, an area of contact between the flavoring sheet 10 and a high-temperature airflow is increased, and thus cooling performance can be improved.

As another example, as illustrated in FIG. 8, the flavoring sheet 10 may be processed so that a plurality of holes 101 are formed therein. For example, the plurality of holes 101 may be formed in the flavoring sheet 10 by a punching process. Here, a diameter of the hole 101 may be in a range of about 0.05 mm to 5 mm or may be in a range of about 0.1 mm to 3 mm, about 0.2 mm to 2.5 mm, about 0.3 mm to 2.1 mm, or about 0.4 mm toe 1.8 mm. Within such numerical ranges, a smooth airflow and appropriate resistance to draw can be ensured. Further, an area of contact between the flavoring sheet 10 and a high-temperature airflow is maximized, and thus the cooling performance of the first segment 221 can be significantly improved.

Meanwhile, in some embodiments, the sheet-forming agent constituting the flavoring sheet 10 may be a cellulose-based material. Examples of the cellulose-based material may include HPMC, MC, CMC, and agar, but the cellulose-based material is not limited thereto. Due to having a property of undergoing a phase change and absorbing a large amount of heat upon contact with a high-temperature airflow, cellulose-based materials can further improve the cooling performance of the first segment 221. Further, by slowly discharging a covered flavoring as the phase change occurs, the cellulose-based materials can significantly improve the flavor persistence of the smoking article 200.

Also, in some embodiments, a flavoring included in the flavoring sheet 10 may be a flavoring whose melting point is about 80 °C or lower. In this case, when the flavoring sheet 10 comes into contact with an airflow having a temperature of 80 °C or higher, the flavoring undergoes a phase change and further absorb heat, and thus the cooling performance of the first segment 221 can be further improved. Considering the fact that heated smoke and/or a heated aerosol generally has a temperature of 80 °C or higher, the use of the above flavoring can effectively improve cooling performance of most heating-type smoking articles. Further, since the phase-changed flavoring is easily volatilized, the flavor expression of the smoking article 200 can also be improved. An example of the flavoring whose melting point is about 80 °C or lower may include menthol, but the flavoring is not limited thereto.

Description will be given with reference back to FIG. 5.

Next, the second segment 222 may perform a function of filtering smoke and/or an aerosol that passed through the first segment 221. Therefore, the second segment 222 may be referred to as a "filter segment 222" or a "filter portion 222" in some cases. Alternatively, due to being positioned at a mouthpiece portion, the second segment 222 may be referred to as a "mouthpiece segment 222" or a "mouthpiece portion 222."

In some embodiments, the second segment 222 may include at least one capsule 240. Here, the capsule 240 may perform a function of producing a flavor or perform a function of generating smoke and/or an aerosol. For example, the capsule 240 may have a structure in which a liquid including a flavoring is wrapped by a film. Also, the capsule 240 may have a spherical or cylindrical shape, but the shape of the capsule 240 is not limited thereto.

Next, the wrapper 230 may correspond to the wrapper 130 described above. Therefore, description thereof will be omitted. As mentioned above, the flavoring sheet 10 may also be applied to the wrapper 230. In that way, the flavor expression and flavor persistence of the smoking article 200 can be further enhanced.

Meanwhile, although not illustrated in FIG. 5, the smoking article 200 may further include a plug (not illustrated) disposed at an end. For example, the plug may be disposed at an upstream end of the smoking article 200 and perform a function of appropriately controlling the overall length of the smoking article 200. Also, in a case in which the smoking article 200 is inserted into an aerosol generation device (not illustrated), the plug may perform a function of controlling the smoking material portion 210 to be disposed at an appropriate position inside the aerosol generation device.

The smoking article 200 according to some other embodiments of the present disclosure has been described above with reference to FIGS. 5 to 8. According to the above description, by the flavoring sheet 10 being applied in various forms to the smoking article 200, the flavor expression and flavor persistence of the smoking article 200 can be improved. Further, by the flavoring sheet 10 being applied to the cooling segment 221 of the smoking article 200, the cooling performance of the smoking article 200 can also be improved.

The embodiments of the present disclosure have been described above with reference to the accompanying drawings, but those of ordinary skill in the art to which the present disclosure pertains should understand that the present disclosure may be embodied in other specific forms without changing the technical spirit or essential features thereof. Therefore, the embodiments described above should be understood as being illustrative, instead of limiting, in all aspects. The scope of the present disclosure should be interpreted according to the claims below, and any technical spirit within the scope equivalent to the claims should be interpreted as falling within the scope of the technical spirit defined by the present disclosure.

## Claims

1. A flavoring sheet comprising:
a hydrocolloid material configured to form a sheet;
an emulsifier; and
a fat-soluble flavoring.

2. The flavoring sheet of claim 1, wherein the flavoring sheet includes, with respect to a total of 100 parts by weight, 0.5 to 10 parts by weight of the emulsifier.

3. The flavoring sheet of claim 1, wherein the flavoring sheet includes, with respect to a total of 100 parts by weight, 10 to 40 parts by weight of the fat-soluble flavoring.

4. The flavoring sheet of claim 1, wherein the hydrocolloid material includes a modified cellulose material.

5. The flavoring sheet of claim 4, wherein the modified cellulose material includes at least one material selected from hydroxypropyl methylcellulose, methyl cellulose, carboxymethyl cellulose, and ethyl cellulose.

6. The flavoring sheet of claim 1, further comprising low methoxyl pectin (LM-pectin).

7. The flavoring sheet of claim 6, wherein the LM-pectin:
includes a carboxyl group by less than 50%; and
has a characteristic of not gelating when cooled.

8. A smoking article comprising:
a smoking material portion;
a filter portion; and
a wrapper configured to wrap around at least a portion of the smoking material portion or the filter portion,
wherein a flavoring sheet is disposed on at least a portion of the smoking material portion, the filter portion, or the wrapper, and
the flavoring sheet includes a hydrocolloid material, an emulsifier, and a fat-soluble flavoring.
